# EUROPÄISCHE PATENTSCHRIFT

(11) **EP 2 974 844 B1**
(45) Veröffentlichungstag und Bekanntmachung des Hinweises auf die Patenterteilung: **01.08.2018**
(21) Anmeldenummer: 15177830.5
(22) Anmeldetag: 27.02.2013
(51) Int. Cl.: B29C 45/28, B29C 45/27

(54) **STELLEINRICHTUNG FÜR EIN HEISSKANALSYSTEM**
ADJUSTING DEVICE FOR A HOT RUNNER SYSTEM
DISPOSITIF DE COMMANDE POUR UN SYSTÈME À CANAL CHAUD

(30) Priorität: 27.02.2012 DE 102012003574
(43) Veröffentlichungstag der Anmeldung: 20.01.2016
(62) Teilanmeldung aus: 13708684.9
(73) Patentinhaber: Otto Männer Innovation GmbH, 79353 Bahlingen a.K. (DE)
(72) Erfinder: SPULLER, Swen, 79362 Forchheim (DE); HERDEL, Marco, 79241 Ihringen (DE); OLARU, George, 79104 Freiburg (DE); KEITEL, Ralph, 68600 Algolsheim (FR); FRIDERICH, Raimund, 79361 Sasbach (DE)
(74) Vertreter: Dunkel, Christoph

(56) Entgegenhaltungen:
- EP-A2- 0 790 116
- DE-A1- 19 956 215
- GB-A- 2 085 350
- US-A- 4 212 627

## Beschreibung

Die Erfindung betrifft eine Stelleinrichtung für ein Heißkanalsystem zum gleichzeitigen Spritzgießen mehrerer Teile in getrennten Formhöhlungen, umfassend
- einen Spritzgieß-Verteiler, der eine Einlassöffnung für Schmelze aufweist,
- mehrere mit dem Verteiler verbundene Heißkanaldüsen, die jeweils eine Ventilnadel aufweisen, zur Steuerung des Schmelzflusses von den Heißkanaldüsen zu den Formhöhlungen,
- eine Trägerplatte oder ein Tragegestell, welche(s) die mehreren Ventilnadeln und/oder mehrere Verstellmittel für die Ventilnadeln trägt, welche Trägerplatte oder welches Tragegestell entlang einer ersten Richtung bewegbar ist, um die Ventilnadeln und/oder Verstellmittel gleichzeitig relativ zu den Formhöhlungen zu bewegen,
- ein Stellmotor zum Verstellen der Trägerplatte oder des Tragegestells und zum Erzeugen einer in Richtung der Formhöhlungen weisenden Schließkraft der Ventilnadeln.

Ein derartiges Heißkanalsystem ist aus US 7 766 646 B2 bekannt. Es weist eine Nadel-Trägerplatte auf, an der mehrere Ventilnadeln angeordnet sind. Die Trägerplatte ist über zwei seitlich voneinander beabstandete Kugelgewindetriebe mit einer Halterung verbunden. Die Kugelumlaufmuttern der Kugelgewindetriebe sind jeweils mit einem Zahnriemenrad verschraubt. Die Zahnriemenräder werden über einen gemeinsamen Zahnriemen von einem Elektromotor angetrieben. Bei dieser Vorrichtung verursachen die Verbindung zwischen dem Elektromotor und dem Zahnriemen und der Zahnriemen Probleme bei der Montage, beim Betrieb der Vorrichtung und bei Wartungsarbeiten.

Aus US 4 497 621, US 6 113 381, US 7 815 431 B2, US 7 866 975 B2 und US 2009/0100962 A1 sind ferner Heißkanalsysteme bekannt, bei denen eine Nadel-Trägerplatte mittels eines Hubmechanismus verstellbar ist, der seitlich an der Trägerplatte verschiebbar gelagerte Führungsstangen mit schräg zur Schieberichtung verlaufende Nockenführungsbahnen aufweist, an denen Nocken angreifen. Wenn die Führungsstangen in eine Schieberichtung verschoben werden, verschieben sich die Nocken entlang Nockenführungsbahnen und die Trägerplatte wird quer zur Schieberichtung verstellt. Beim Verschieben der Führungsstangen treten relativ große Kräfte an den Nockenführungsbahnen und den Nocken auf.

Aus der britischen Offenlegungsschrift GB 2 085 350 A ist eine Stelleinrichtung zum Verstellen von Ventilnadeln einer Heißkanal-Spritzgießvorrichtung bekannt, wobei die Ventilnadeln jeweils mit Verstellmittel (axial-verschiebbare Hülsen) derart gehalten werden, dass die Ventilnadeln mittels der Hülsen und jeweils mittels einer Hubvorrichtung (Kombination von Zahnrädern mit Zahnstangen) axial verschoben werden können.

Die deutsche Offenlegungsschrift DE 199 56 215 A1 beschreibt eine Nadelverschlussdüse für Spritzgießformen, die zum Verstellen der Verschlussnadel einen Antrieb aufweist, der als elektrisch angetriebener Positioniermotor ausgebildet ist und somit Längentoleranzen der Verschlussnadeln bei deren Einstellung in Öffnungs- und vor allem in Schließposition berücksichtigen kann und ferner auch Zwischenpositionen einstellen und fixieren kann.

Die europäische Patentanmeldung EP 0 790 116 A2 offenbart eine Trägerplatte mit daran angebrachten Ventilnadeln sowie eine Zahnstange, die in unmittelbaren Kontakt mit Enden von den Ventilnadeln steht, um die Ventilnadeln rotieren zu können, womit diese Rotation zusätzlich und unabhängig der Axialverschiebung der Trägerplatte erfolgen kann.

In der US-Patentschrift US 4 212 627 A ist ein Heißkanalsystem beschrieben, mit einem Spritzgieß-Verteiler, mehreren mit dem Verteiler verbundenen Heißkanaldüsen, einer Trägerplatte oder einem Tragegestell, einem Stellmotor zum Verstellen der Trägerplatte oder des Tragegestells, einem außerhalb des Stellmotors angeordneten Schiebemechanismus, einem Eingreif- oder Verbindungsmechanismus und einem Hubmechanismus. Die Trägerplatten werden in Axialrichtung der Ventilnadeln über Hebel verschoben.

Aufgabe der Erfindung ist es, eine Stelleinrichtung zum Verstellen von Ventilnadeln einer Heißkanal-Spritzgießvorrichtung zu schaffen, die kompakte Abmessungen ermöglicht und bei der auch eine große Anzahl von beispielsweise bis zu 144 Ventilnadeln genau exakt synchron zueinander werden kann. Dabei soll die Stelleinrichtung ein schnelles und präzises Verstellen der Ventilnadeln ermöglichen.

Diese Aufgabe wird durch eine Stelleinrichtung zum Verstellen von Ventilnadeln einer Heißkanal-Spritzgießvorrichtung gelöst, die folgendes umfasst:
- eine Halterung, an der eine mehrere Ventilnadeln und/oder Verstellmittel für die Ventilnadeln tragende Trägerplatte in Axialrichtung der Ventilnadeln und/oder Verstellmittel hin- und her verschiebbar ist,
- einen mit der Halterung verbundenen Verteiler, an dem Heißkanaldüsen angeordnet sind, in die sich die Ventilnadeln erstrecken, um die Strömung einer Schmelze zu steuern,
- eine Hubvorrichtung zum Verschieben der Trägerplatte in Axialrichtung der Ventilnadeln und/oder Verstellmittel, welche Hubvorrichtung an der Halterung ein um eine erste Achse drehbar gelagertes erstes Drehelement und ein um eine zu der ersten Achse parallele zweite Achse drehbar gelagertes zweites Drehelement aufweist, wobei das erste Drehelement über eine mindestens eine erste Schrägfläche aufweisende erste Bewegungstransformationseinrichtung und das zweite Drehelement über eine mindestens eine zweite Schrägfläche aufweisende zweite Bewegungstransformationseinrichtung mit der Trägerplatte in Antriebsverbindung steht,
- wobei die Stelleinrichtung einen mit einer Ansteuereinrichtung verbundenen Stellantrieb zum Erzeugen einer Linearbewegung aufweist,
- wobei mit dem Stellantrieb ein Schiebemechanismus in Antriebsverbindung steht, der eine erste Schubstange und eine parallel dazu beabstandete zweite Schubstange aufweist, die miteinander verbunden und an der Halterung in eine quer zur Axialrichtung der Ventilnadeln und/oder Verstellmittel orientierten Schieberichtung hin und her verschiebbar gelagert sind, und wobei die erste Schubstange mit dem ersten Drehelement und die zweite Schubstange mit dem zweiten Drehelement in Antriebsverbindung steht.

In vorteilhafter Weise ist es dadurch möglich, die Trägerplatte an den Bewegungstransformationseinrichtungen mit Abstand vom Rand der Trägerplatte gegen die Halterung abzustützen, so dass auch bei großen Trägerplatten, die eine Vielzahl von Ventilnadeln und/oder Verstellmittel aufweisen, Biegeverformungen der Trägerplatte bei einem schnellen Öffnen und Schließen der Heißkanaldüsen weitestgehend vermieden werden. Somit kann eine große Anzahl von Ventilnadeln mit hoher Dynamik mit nur einem einzigen Stellantrieb synchron zueinander verstellt werden. Da der Schiebemechanismus und die die Schrägflächen aufweisende Bewegungstransformationseinrichtung eine mechanisch stabile bzw. starre Antriebsverbindung zwischen dem Stellantrieb und der Trägerplatte ermöglicht, kann die mittels des Stellantriebs erzeugte Linearbewegung gleichmäßig auf die einzelnen Bewegungstransformationseinrichtung und von diesen auf voneinander beabstandete Stellen der Trägerplatte übertragen werden. Somit wird auch bei einer hochdynamischen Verstellung der Ventilnadeln ein zeitgleiches Öffnen und Schließen sämtlicher Ventilnadeln ermöglicht.

Bei einer vorteilhaften Ausgestaltung der Erfindung ist der Stellmotor derart als Elektromotor ausgestaltet und/oder mittels einer geeigneten Ansteuereinrichtung ansteuerbar, dass die Ventilnadeln in mindestens einer zwischen einer ersten Position und einer zweiten Position angeordnete dritte Position positionierbar sind und in der dritten Position gegebenenfalls gehalten werden können. Die Ventilnadeln können dann bei Bedarf während des Spritzgießprozesses in die mindestens eine dritte Position gebracht werden, um den Schmelzfluss noch besser zu steuern. Die Ventilnadeln können also in einer kontrollierten Weise axial verstellt werden. So können die Heißkanaldüsen beispielsweise in der dritten Position einen relativ kleinen Öffnungsquerschnitt aufweisen, so dass die Schmelze dann mit hoher Fließgeschwindigkeit in die Formhöhlung gespritzt wird, was den Vorteil hat, dass gleichzeitig in der Düsenöffnung eine große Reibungswärme entsteht, die den Fließvorgang begünstigt und aufrecht erhält. Sind die Formhöhlung jedoch nahezu mit Spritzgießmaterial gefüllt und beginnt dieses einerseits zu erstarren und andererseits zu schwinden, kann eine Nachdruckphase eingeleitet werden, bei der die Ventilnadeln zurückgezogen und dadurch der Öffnungsquerschnitt vergrößert wird, so dass trotz der jetzt ungünstigeren Bedingungen Spritzgießmaterial nachgedrückt werden kann.

Bei einer bevorzugten Ausführungsform weisen die Ventilnadeln jeweils an ihrem von der Trägerplatte entfernten freien Endbereich einen zylindrischen Abschnitt auf, der vorzugsweise derart jeweils mit einem dazu passenden Ventilsitz der betreffenden Heißkanaldüse zusammenwirkt, dass diese sowohl in der zweiten Position als auch in der dritten Position der Ventilnadeln geschlossen ist. Die Ventilnadeln können dann vor dem Entformen der Spritzlinge etwas aus ihrer Schließstellung bzw. ihrer Endlage, in der sie in der zweiten Position angeordnet sind, in welcher sie etwas in die Formhöhlung vorstehen, in die dritte Position zurückbewegt werden, um danach die Spritzlinge aus den Formhöhlungen zu entnehmen. Dadurch wird verhindert, dass die Ventilnadeln beim Entformen der Spritzlinge mit diesen in Kontakt geraten und Spuren auf der Oberfläche der Spritzlinge hinterlassen. Außerdem wird durch das Positionieren der Ventilnadeln in den mindestens drei unterschiedlichen Positionen eine saubere Angussstelle ermöglicht.

Bei einer zweckmäßigen Ausgestaltung haben mindestens zwei Heißkanaldüsen in unterschiedliche Richtungen weisende Auslassöffnungen und in unterschiedliche Richtungen weisende Ventilnadeln, wobei diese Ventilnadeln derart mit einem Verstellmittel in Antriebsverbindung stehen, dass die Schließkraft von dem Verstellmittel auf die Ventilnadeln übertragbar ist. Dadurch ist es möglich, mit einem Verstellmittel mehrere Ventilnadeln gleichzeitig zu verstellen. Die Ventilnadeln sind dabei quer und insbesondere rechtwinklig zum Verstellmittel angeordnet. Das Verstellmittel kann stab- oder stiftförmig ausgestaltet sein.

Bei einer vorteilhaften Ausführungsform der Erfindung weist die Hubvorrichtung an der Halterung ein um eine dritte Achse drehbar gelagertes, mit der ersten Schubstange in Antriebsverbindung stehendes drittes Drehelement und ein um eine vierte Achse drehbar gelagertes, mit der zweiten Schubstange in Antriebsverbindung stehendes viertes Drehelement aufweist, dass die dritte und vierte Achse jeweils parallel zur ersten und zweiten Achse beabstandet sind, und dass das dritte Drehelement über eine mindestens eine dritte Schrägfläche aufweisende dritte Bewegungstransformationseinrichtung und das vierte Drehelement über eine mindestens eine vierte Schrägfläche aufweisende vierte Bewegungstransformationseinrichtung mit der Trägerplatte in Antriebsverbindung steht. Die Trägerplatte kann also auch über mindestens vier Spindelantriebe mit der Halterung verbunden sein, wodurch eine noch größere Anzahl von Ventilnadeln zeitgleich verstellt werden kann. Vorteilhaft ist, wenn die Schubstangen als Zahnstangen und die Drehelemente als damit in Eingriff stehende Zahnräder ausgestaltet sind. Die Stelleinrichtung ermöglicht dann noch kompaktere Abmessungen.

Bei einer anderen vorteilhaften Ausgestaltung der Erfindung sind die einzelnen Drehelemente jeweils an einer von ihrer Achse beabstandeten Stelle über eine quer zur Schieberichtung verlaufende Kulissenführung und/oder ein Schwenklager mit der ihnen jeweils zugeordneten Schubstange verbunden. Die Stelleinrichtung ist dann kostengünstig herstellbar.

Vorteilhaft ist, wenn die Bewegungstransformationseinrichtungen als Kugelgewindetriebe ausgestaltet sind. Die Trägerplatte kann dann reibungsarm verstellt werden. Dies ist insbesondere bei einer großen Trägerplatte von Vorteil, die mit einem einzigen Elektromotor verstellt wird.

Bei einer bevorzugten Ausgestaltung der Erfindung sind die Drehelemente zwischen den Schubstangen angeordnet. Der zwischen den Drehelementen befindliche Raum kann dabei für die Halterung genutzt werden, so dass diese entsprechend stabil ausgestaltet sein kann.

Bevorzugt weisen die einzelnen Kugelgewindetriebe jeweils eine fest mit der Trägerplatte verbundene Kugelumlaufspindel und eine darauf angeordnete Kugelumlaufmutter auf, die um ihre Achse drehbar an der Halterung gelagert und drehfest mit dem ihm zugeordneten Drehelement verbunden ist. Die Trägerplatte kann dann bei der Montage der Stelleinrichtung oder nach der Durchführung von Service- oder Wartungsarbeiten auf einfache Weise an der Halterung montiert werden, indem die Trägerplatte mit ihrer Erstreckungsebene zunächst parallel zur Halterung bzw. normal zu den Achsen der Kugelumlaufspindeln ausgerichtet und dann mit den Kugelumlaufspindeln verschraubt wird.

Zweckmäßigerweise sind an den Kugelumlaufspindeln einerseits und an der Trägerplatte andererseits miteinander zusammenwirkende konische Zentriermittel vorgesehen, wobei die einzelnen Kugelumlaufspindeln jeweils mittels einer Schraube oder Mutter mit der Trägerplatte verschraubt sind. Die Trägerplatte kann dann auf einfache Weise an den Kugelumlaufspindeln montiert werden, indem die miteinander zusammenwirkende Zentriermittel jeweils derart aneinander positioniert werden, dass sie flächig aneinander anliegen. Danach werden die Kugelumlaufspindeln mittels der Schrauben und/oder Muttern mit der Trägerplatte verschraubt, wobei die Schrauben bzw. Muttern bevorzugt mit einem vorbestimmten Drehmoment angezogen werden. Die Zentriermittel sind bevorzugt so ausgestaltet, dass das beim Anziehen der Schrauben bzw. Muttern auf die Kugelumlaufspindeln einwirkende Drehmoment vollständig in die Trägerplatte eingeleitet wird, so dass sich die Kugelumlaufspindeln nicht mit den Schrauben bzw. Muttern mitdrehen können. In vorteilhafter Weise wird außerdem ein beim Betrieb der Stelleinrichtung auf die Kugelumlaufspindeln einwirkendes Drehmoment über die Zentriermittel direkt in die Trägerplatte eingeleitet, so dass sich die Schrauben oder Muttern nicht lösen können.

Bei einer vorteilhaften Ausführungsform weist der Stellantrieb einen Elektromotor mit einem mit der Halterung verbundenen Stator und einem Rotor auf, wobei der Rotor über einen weiteren Kugelgewindetrieb mit dem Schiebemechanismus in Antriebsverbindung steht. Die Drehbewegung des Rotors kann dadurch reibungsarm in die Linearbewegung konvertiert werden. Der Elektromotor kann insbesondere ein Servomotor und bevorzugt ein Torquemotor sein. Bei Bedarf kann der Elektromotor derart ausgestaltet und/oder mittels einer geeigneten Ansteuereinrichtung ansteuerbar sein, dass die Ventilnadeln in mindestens einer zwischen ihrer Offen- und ihrer Schließstellung angeordneten Zwischenposition positionierbar sind.

Bevorzugt weist der Schiebemechanismus einen die erste Schubstange und die zweite Schubstange U-förmig miteinander verbindenden Quersteg auf, wobei der Stellantrieb zum Verstellen des Schiebemechanismus an dem Quersteg angreift.

Dadurch ergibt sich ein einfacher und symmetrischer Aufbau, bei dem die Linearbewegung des Stellantriebs gleichmäßig auf die beiden Schubstangen übertragen werden kann.

Erwähnt werden soll noch, dass die Halterung mindestens eine Platte oder einen Rahmen aufweisen kann.

Nachfolgend sind Ausführungsbeispiele der Erfindung anhand der Zeichnungen näher erläutert. Es zeigen:
- Fig. 1: eine perspektivische Darstellung eines ersten Ausführungsbeispiels einer Stelleinrichtung zum Verstellen der Nadelventile einer Heißkanal-Spritzgießvorrichtung, wobei nur einige der insgesamt vorhandenen Heißkanaldüsen dargestellt sind,
- Fig. 2: einen Teillängsschnitt durch die Stelleinrichtung, auf dem nur einige der insgesamt vorhandenen Heißkanaldüsen dargestellt sind,
- Fig. 3: einen Teillängsschnitt durch ein Heißkanalsystem, auf dem zwei der insgesamt vorhandenen Heißkanaldüsen dargestellt sind,
- Fig. 4: einen Querschnitt durch die Stelleinrichtung,
- Fig. 5: einen Teilquerschnitt der Stelleinrichtung, der einen Kugelgewindetrieb zeigt,
- Fig. 6: eine perspektivische Teildarstellung der Stelleinrichtung, auf der die Zahnstangen und Kugelgewindetrieben besonders gut erkennbar sind,
- Fig. 7: eine Teilseitenansicht der Stelleinrichtung, auf der eine mit Hilfe von elektrisch angetriebenen Zahnstangen und Kugelgewindetrieben verstellbare Trägerplatte und ein darunter befindlicher Verteiler für Schmelze erkennbar ist,
- Fig. 8: eine Teilaufsicht auf ein zweites Ausführungsbeispiel der Stelleinrichtung, auf der zwei eine Kulissenführung aufweisende Schubstangen erkennbar sind, die drehbar gelagerte Hebel antreiben,
- Fig. 9: eine Teilaufsicht auf ein drittes Ausführungsbeispiel der Stelleinrichtung,
- Fig. 10: eine Teilaufsicht auf ein viertes Ausführungsbeispiel der Stelleinrichtung,
- Fig. 11: eine schematische Darstellung einer Bewegungstransformationseinrichtung, die eine Welle mit einer Schrägflächen aufweisenden Nockenbahn hat,
- Fig. 12: eine Teillängsschnitt durch eine in Verbindung mit der Erfindung verwendbare Heißkanaldüse,
- Fig. 13 bis 15: Teillängsschnitte einer weiteren in Verbindung mit der Erfindung verwendbaren Heißkanaldüse, welche den Bereich um die Auslassöffnung der Heißkanaldüse zeigen, wobei die Ventilnadel in unterschiedlichen Positionen dargestellt ist,
- Fig. 16: einen Längsschnitt durch eine weitere in Verbindung mit der Erfindung verwendbare Heißkanaldüse eines Heißkanalsystems,
- Fig. 17: einen vergrößerten Ausschnitt der in Fig. 16 gezeigten Heißkanaldüse im Bereich der Auslassöffnung, wobei die Ventilnadel der Heißkanaldüse in einer ersten Position angeordnet ist,
- Fig. 18: eine Darstellung ähnlich Fig. 17, wobei jedoch die Ventilnadel der Heißkanaldüse in einer zweiten Position angeordnet ist, und
- Fig. 19: einen Teillängsschnitt durch ein Heißkanalsystem, das in Verbindung mit der Erfindung verwendbare Heißkanaldüsen mit in unterschiedliche Richtungen weisenden Auslassöffnungen hat.

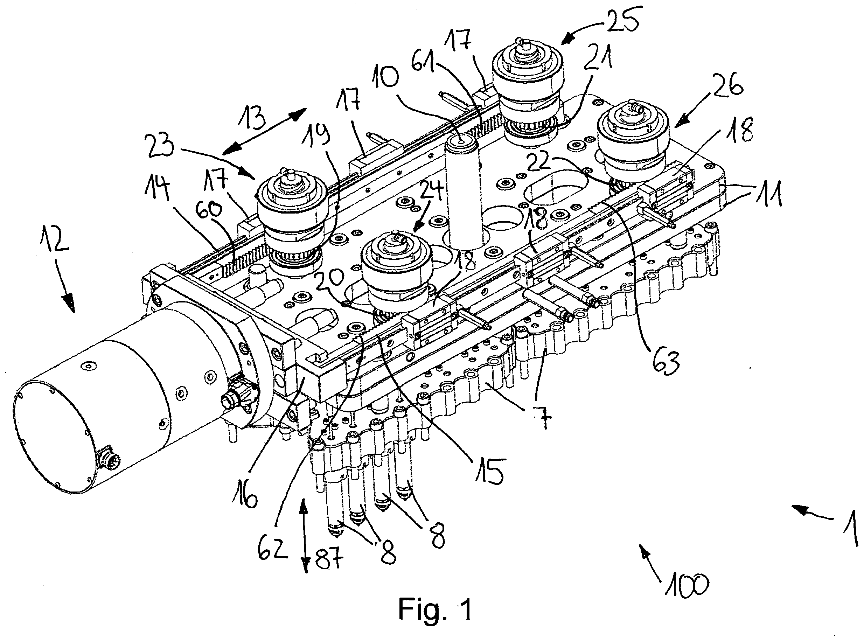

Eine in Fig. 1 im Ganzen mit 1 bezeichnete Stelleinrichtung zum Verstellen von Ventilnadeln 2 eines Heißkanalsystems 100 für eine Heißkanal-Spritzgießvorrichtung weist eine Halterung auf, die einen Plattenstapel mit mehreren plan aufeinanderliegende Halteplatten 3, 4, 5, 6 umfasst.

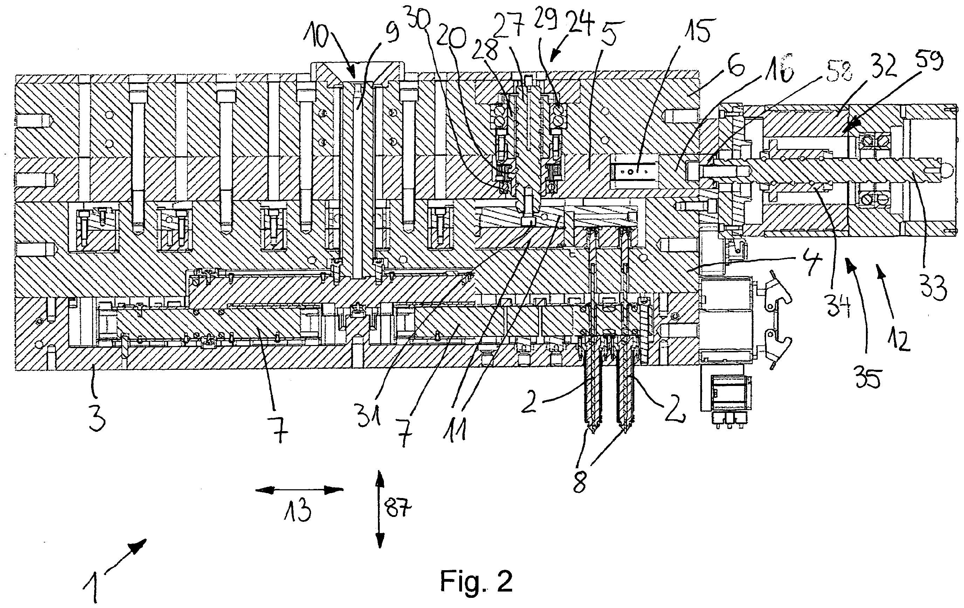

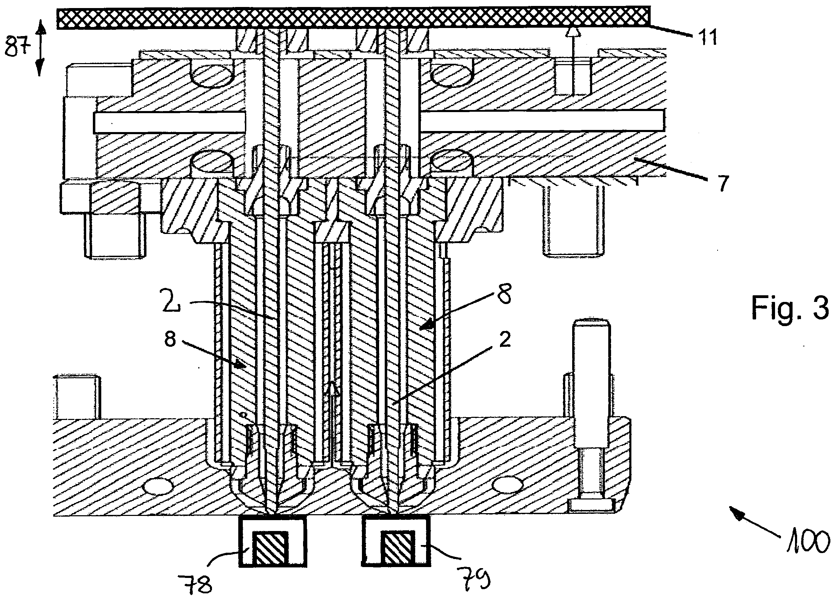

Zwischen einer ersten Halteplatte 3 und einer mit dieser fest verbundenen zweiten Halteplatte 4 ist eine Aussparung vorgesehen, in der ein Verteiler 7 angeordnet ist, der mit mehreren Heißkanaldüsen 8 verbunden ist. Wie in Fig. 2 erkennbar ist, ist der Verteiler 7 über einen Zuführkanal 9 mit einer Einlassöffnung 10 verbunden, an der eine Einspritzdüse einer Spritzgießmaschine anschließbar ist, die eine formbare Schmelze in den Verteiler 7 liefert. Der Verteiler 7 weist in an sich bekannter Weise mit dem Zuführkanal 9 verbundene Kanäle auf, die zu den Heißkanaldüsen 8 führen. Über die Heißkanaldüsen 8 kann die Schmelze in Formhöhlungen 78, 79 einer Spritzgießform eingespritzt werden (Fig. 3). Dabei ist jeder Heißkanaldüse 8 vorzugsweise eine separate Formhöhlung 78, 79 zugeordnet. Die Formhöhlung 78, 79 sind zwischen in eine Offen- und eine Schließstellung bringbaren Formwerkzeugteilen 83, 84 gebildet.

In jeder Heißkanaldüse 8 ist jeweils eine Ventilnadel 2 eines Nadelverschlusses zwischen einer Offen- und einer Schließstellung in Axialrichtung der Heißkanaldüse 8 verschiebbar angeordnet. Mit Hilfe der Ventilnadeln 2 kann die Strömung der Schmelze gesteuert werden.

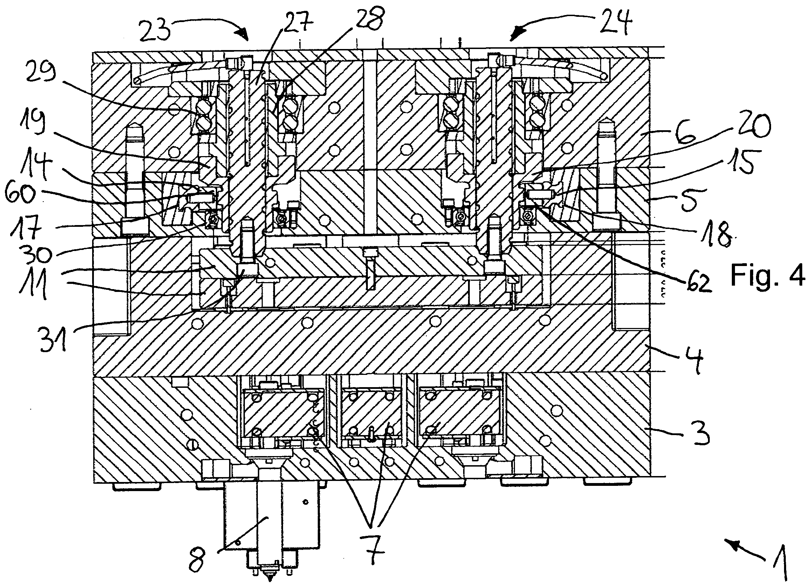

Sämtliche Ventilnadeln 2 sind parallel zueinander beabstandet und jeweils an einem von dem ihnen zugeordneten Ventilsitz 77 entfernten Endbereich mit einer gemeinsamen Trägerplatte 1 verbunden. Die Trägerplatte 11 ist zum zeitgleichen Öffnen und Schließen der Heißkanaldüsen 8 in Axialrichtung der Ventilnadeln 2 relativ zu den Halteplatten 3, 4, 5, 6 der Halterung entlang einer ersten Richtung 87 hin- und her verschiebbar an der Halterung gelagert. In den Fig. 2 und 4 ist die Trägerplatte 11 in ihrer unteren Position dargestellt, in der die Ventilnadeln 2 an den Ventilsitzen 77 anliegen und die Auslassöffnungen 80 der Heißkanaldüsen 8 somit geschlossen sind.

Zum Verstellen der Ventilnadeln 2 zwischen der Offen- und der Schließstellung weist die Stelleinrichtung 1 einen Stellantrieb 12 auf, der ein Stellelement 58 hat, das entsprechend einer Linearbewegung in eine quer zur Axialrichtung der Ventilnadeln 2 orientierte zweiten Richtung 13, die nachstehend auch als Schieberichtung 13 bezeichnet wird, relativ zu den Halteplatten 3, 4, 5, 6 hin und her bewegbar ist.

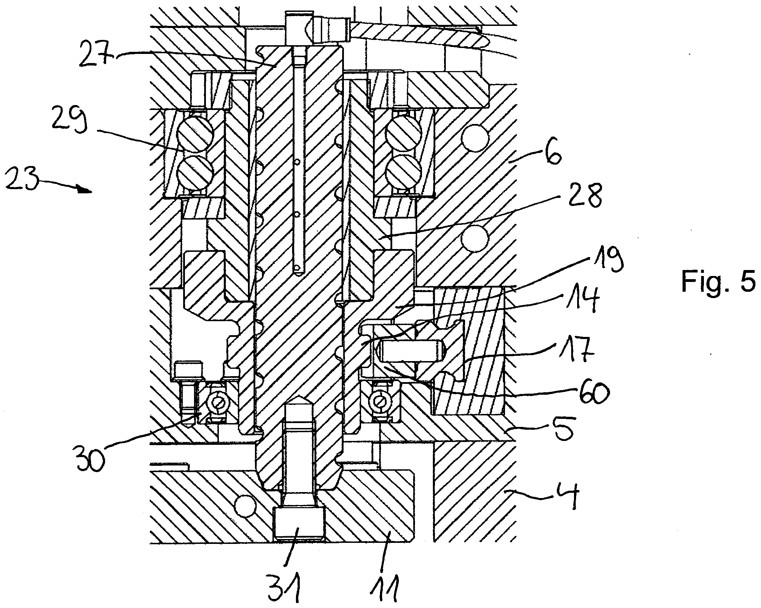

Das Stellelement 58 steht mit einem Schiebemechanismus in Antriebsverbindung, der eine erste Schubstange 14 und eine parallel dazu beabstandete zweite Schubstange 15 aufweist, die an der Halterung in Schieberichtung 13 hin her verschiebbar gelagert sind. In Fig. 5 ist erkennbar, dass eine benachbart zu der zweiten Halteplatte 4 angeordnete dritte Halteplatte 5 für jede Schubstange 14, 15 jeweils eine Schwalbenschwanzführung 17, 18 aufweist, an der die betreffende Schubstange 14, 15 verschiebbar geführt ist. Anstelle der Schwalbenschwanzführungen 17, 18 kann auch eine geeignete andere Linearführung vorgesehene sein, insbesondere eine Kugelumlaufführung oder eine Rundführung. Die Schubstangen 14, 15 sind als biegesteife Elemente ausgestaltet.

Bei dem in Fig. 1, 2 und 3-6 gezeigten Ausführungsbeispiel sind die Schubstangen 14, 15 durch einen biegesteifen Quersteg 16 fest miteinander verbunden. An dem Quersteg 16 greift das Stellelement 58 des Stellantriebs 12 an.

Die Schubstangen 14, 15 stehen über eine Hubvorrichtung mit der Trägerplatte 11 in Antriebsverbindung.

Die Hubvorrichtung hat ein um eine erste Achse drehbar an einer vierten Halteplatte 6 der Halterung gelagertes, mit der ersten Schubstange 14 in Antriebsverbindung stehendes erstes Drehelement 19. Wie in Fig. 1 und 4 erkennbar ist, ist die erste Schubstange 14 als Zahnstange und erste Drehelement 19 als ein damit in Eingriff stehendes Zahnrad ausgestaltet.

In entsprechender Weise hat die Hubvorrichtung ein um eine parallel zur ersten Achse angeordnete zweite Achse drehbar an der vierten Halteplatte 6 gelagertes, mit der zweiten Schubstange 15 in Antriebsverbindung stehendes zweites Drehelement 20. Die zweite Schubstange 15 ist als Zahnstange und das zweite Drehelement 20 als ein damit in Eingriff stehendes Zahnrad ausgestaltet.

Die Hubvorrichtung hat ferner ein um eine parallel zur ersten Achse angeordnete dritte Achse drehbar an der vierten Halteplatte 6 gelagertes, mit der ersten Schubstange 14 in Antriebsverbindung stehendes drittes Drehelement 21, das als mit der ersten Schubstange 14 in Eingriff stehendes Zahnrad ausgestaltet ist.

In entsprechender Weise hat die Hubvorrichtung ein um eine parallel zur ersten Achse angeordnete vierte Achse drehbar an der vierten Halteplatte 6 gelagertes, mit der zweiten Schubstange 15 in Antriebsverbindung stehendes viertes Drehelement 2, das als mit der zweiten Schubstange 15 in Eingriff stehendes Zahnrad ausgestaltet ist.

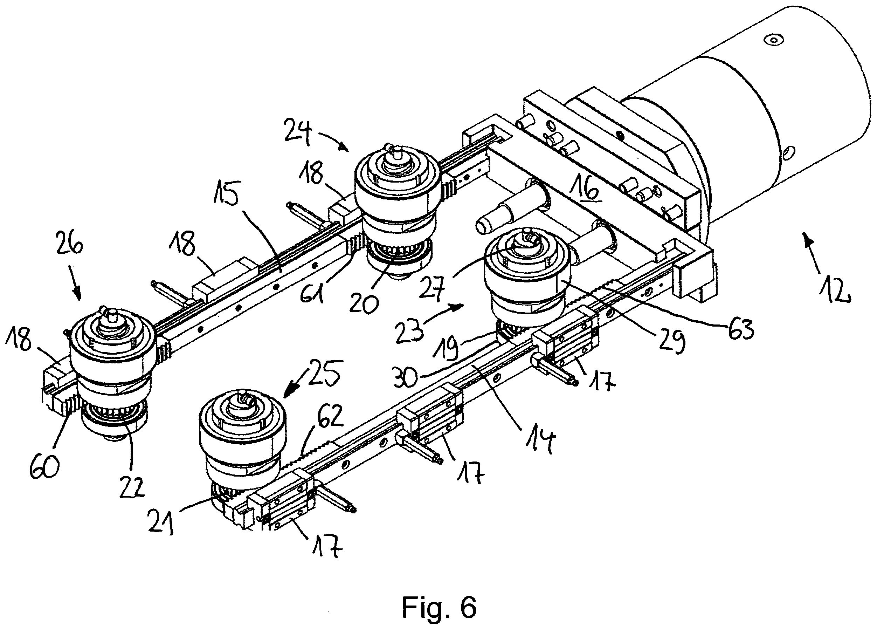

In Fig. 6 ist erkennbar, dass die Drehelemente 19, 20, 21, 22 jeweils zwischen den Schubstangen angeordnet sind. Dabei ist die erste Achse und die vierte Achse sowie die zweite Achse und die dritte Achse punktsymmetrisch bezüglich einer Symmetrieachse angeordnet, die etwa mit der Längsmittelachse des Zuführkanals übereinstimmt.

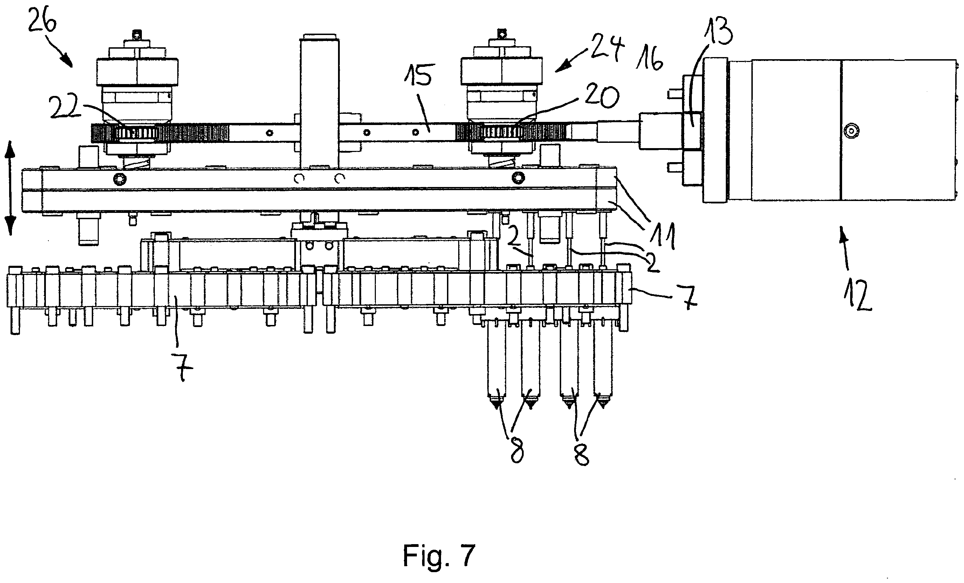

Das erste Drehelement 19 steht über eine erste Bewegungstransformationseinrichtung 23, das zweite Drehelement 20 über eine zweite Bewegungstransformationseinrichtung 24, das dritte Drehelement 21 über eine dritte Bewegungstransformationseinrichtung 25 und das vierte Drehelement 22 über eine vierte Bewegungstransformationseinrichtung 26 mit der Trägerplatte 11 in Antriebsverbindung (Fig. 7). Die Bewegungstransformationseinrichtungen 23, 24, 25, 26 sind jeweils als Kugelgewindetriebe ausgestaltet, welche die translatorische Bewegung der Schubstangen 14, 15 um 90° in Axialrichtung der Ventilnadeln 2 umlenken.

In Fig. 5 ist erkennbar, dass die erste Bewegungstransformationseinrichtung 23 eine fest mit der Trägerplatte 11 verbundene Kugelumlaufspindel 27 und eine darauf angeordnete Kugelumlaufmutter 28 aufweist, die mittels eines ersten Wälzlagers 29 um die erste Achse drehbar an der vierten Halteplatte 6 gelagert ist. Zwischen der Kugelumlaufspindel 27 und der Kugelumlaufmutter 28 sind in der Zeichnung nicht näher dargestellte Lagerkugeln angeordnet, die sich entlang von wendelförmig um die Kugelumlaufspindel 27 umlaufenden Schrägflächen bewegen können, die sich entlang einer geschlossenen Bahnkurve an der Mantelfläche der Kugelumlaufspindel 27 und der Innenwand der Kugelumlaufmutter 28 erstrecken.

Die Kugelumlaufmutter 28 ist drehfest mit dem ersten Drehelement 19 verbunden, das mittels eines zweiten Wälzlagers 30 an der dritten Halteplatte 5 um die erste Achse drehbar gelagert ist.

Der Aufbau der zweiten, dritten und vierten Bewegungstransformationseinrichtungen 24, 25, 26 entspricht dem Aufbau der ersten erste Bewegungstransformationseinrichtung 23, weshalb die dortige Beschreibung für die Bewegungstransformationseinrichtungen 24, 25, 26 entsprechend gilt.

Wenn die Schubstangen 14, 15 mit Hilfe des Stellantriebs in Schieberichtung 13 relativ zu den Halteplatten 3, 4, 5, 6 verschoben werden, verdrehen sich die Drehelemente 19, 20, 21, 22 und die Kugelumlaufmuttern 28 der Bewegungstransformationseinrichtungen 23, 24, 25, 26 um ihre jeweiligen Achsen, wodurch die Kugelumlaufspindeln 27 und die damit fest verbundene Trägerplatte 11 in Axialrichtung der Ventilnadeln 2 relativ zu den Halteplatten 3, 4, 5, 6 und den damit fest verbundenen Ventilsitzen 77 verschoben werden.

In Fig. 5 ist erkennbar, dass an der Kugelumlaufspindel 27 ein Außenkonus und an der Trägerplatte 11 ein dazu passender Innenkonus vorgesehen ist. Die Kugelumlaufspindel 27 ist mittels einer die Trägerplatte 11 zumindest bereichsweise durchsetzenden Schraube 31, die mit einer stirnseitig in die Kugelumlaufspindel 27 eingebrachten Gewindebohrung verschraubt ist, fest mit der Trägerplatte 11 verbunden.

Der Stellantrieb 12 hat einen Elektromotor mit einem mit der Halterung verbundenen Stator 32 und einem in der Zeichnung nicht näher dargestellten Rotor auf, der eine auf einer weiteren Kugelumlaufspindel 33 angeordnete weitere Kugelumlaufmutter 34 einer weiteren Bewegungstransformationseinrichtung 35 antreibt. Diese Kugelumlaufmutter 34 ist axial relativ zum Stator 32 fixiert, so dass sich die Kugelumlaufspindel 33 in Schieberichtung 13 relativ zu Halterung bewegt, wenn die Kugelumlaufmutter 34 von dem Rotor angetrieben wird. Dabei wird die Drehbewegung des Rotors in eine Linearbewegung umgesetzt. Zur Steuerung der Ventilnadeln 2 ist der Elektromotor mit einer in der Zeichnung nicht näher dargestellten elektrischen Ansteuereinrichtung verbunden, welche den Elektromotor derart ansteuert, dass die Ventilnadeln in der Offenstellung in einer vorbestimmten ersten Position und in der Schließstellung in einer vorbestimmten zweiten Positionen positioniert sind.

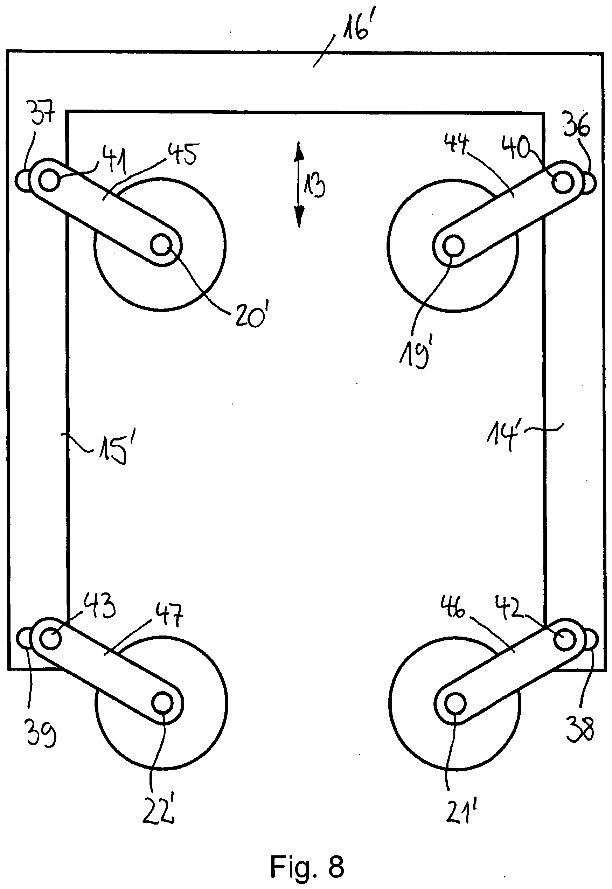

Auch bei dem in Fig. 8 gezeigten Ausführungsbeispiel sind die Schubstangen 14', 15' parallel zueinander angeordnet und durch einen Quersteg 16' etwa U-förmig miteinander verbunden. Mit Hilfe eines in Fig. 8 nicht näher dargestellten Stellantriebs kann der aus den Schubstangen 14', 15' und dem Quersteg 16' gebildete Schiebemechanismus in einer rechtwinklig zur Längserstreckung der Ventilnadeln verlaufenden Schieberichtung 13 relativ zu der Halterung verschoben werden.

Die Umsetzung der translatorischen Bewegung der Schubstangen 14', 15' in die Drehbewegung der Drehelemente 19', 20', 21', 22' erfolgt mittels einer quer zur Schieberichtung 13 verlaufenden Kulissenführung, die an den Schubstangen 14', 15' für jedes von der betreffenden Schubstange 14', 15' angetriebene Drehelement 19', 20', 21', 22' jeweils eine quer zur Schieberichtung 13 verlaufende Führungsnut 36, 37, 38, 39 aufweist, in die ein von der Achse des betreffenden Drehelements 19', 20', 21', 22' beabstandetes Führungselement 40, 41, 42, 43 eingreift, welches jeweils über einen Hebel 44, 45, 46, 47 mit dem Drehelement 19', 20', 21', 22' in Antriebsverbindung steht. Die Drehelemente 19', 20', 21', 22' sind jeweils über Bewegungstransformationseinrichtungen mit der Trägerplatte 11 verbunden. Die Bewegungstransformationseinrichtungen können wie bei dem in Fig. 1, 2 und 3 bis 6 dargestellten Ausführungsbeispiel als Kugelgewindetriebe ausgestaltet sein.

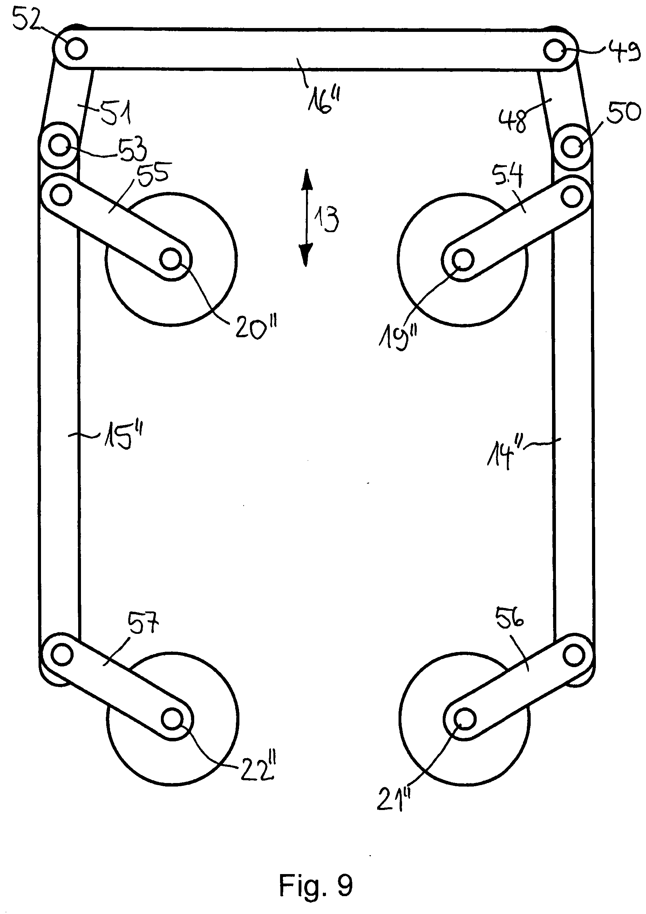

Wie in Fig. 9 erkennbar ist, kann der Quersteg 16" auch jeweils über ein Zwischenelement 48, 49 mit den Schubstangen 14", 15" gelenkig verbunden sein. Dabei ist ein erstes Zwischenelement 48 über ein erstes Gelenk 50 mit dem Quersteg 16" und über ein von der Schwenkachse des ersten Gelenks 50 beabstandetes zweites Gelenk 51 mit der ersten Schubstange 14" verbunden. In entsprechender Weise ist ein zweites Zwischenelement 51 über ein drittes Gelenk 52 mit dem Quersteg 16" und über ein von der Schwenkachse des dritten Gelenks 51 beabstandetes viertes Gelenk 53 mit der zweiten Schubstange 15" verbunden. Die Umsetzung der translatorischen Bewegung der Schubstangen 14", 15" in die Drehbewegung der Drehelemente 19", 20", 21", 22" erfolgt über Verbindungsstangen 54, 55, 56, 57, die jeweils an voneinander beabstandeten Stellen einerseits mit der ihnen zugeordneten Schubstange 14", 15" und andererseits mit dem ihnen zugeordneten Drehelement 19", 20", 21", 22" verbunden sind. Wenn die Schubstangen 14", 15" in Schieberichtung 13 bewegt werden, verändert sich der Abstand zwischen den Schubstangen 14", 15".

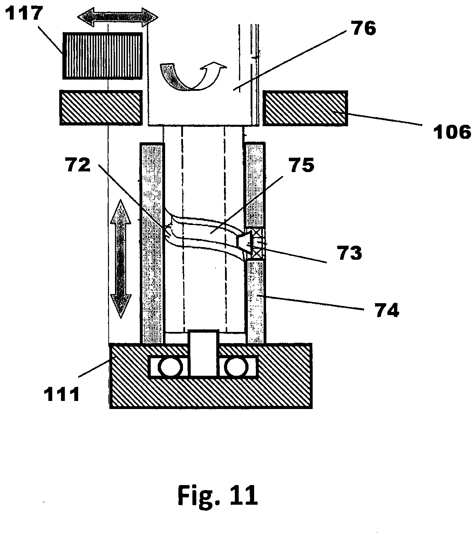

Bei einem in Fig. 11 gezeigten weiteren Ausführungsbeispiel der Erfindung ist der Kugelgewindetrieb durch einen Nockenmechanismus ersetzt. Eine Nut 75 auf einer drehbaren Welle 76 hat geneigte Schrägen 72, die eine Nockenbahn bilden.

Eine kegelstumpfförmige Mitnehmerrolle 73, welche in die Nockenbahn eingreift, ist an der Innenwand einer Mitnehmerhülse 74 drehbar gelagert Anstelle der kegelstumpfförmigen Mitnehmerrolle 73 kann auch eine zylindrische Mitnehmerrolle 73 vorgesehen sein, die mit komplementären Schrägen der Nockenbahn zusammenwirkt. Die kegelstumpfförmige Mitnehmerrolle 73 verhindert jedoch einen größeren Schlupf zwischen Mitnehmerrolle 73 und Nockenbahn und reduziert dadurch die Reibung.

Bei diesem Ausführungsbeispiel bewirkt die Schiebebewegung des Schiebemechanismus 117 eine Drehung der Welle 76 und die Translationsbewegung der Mitnehmerhülse 74 verursacht eine auf und ab Bewegung der Trägerplatte 11 relativ zu der ortsfesten Halteplatte 106 und den Formhöhlungen 78, 79.

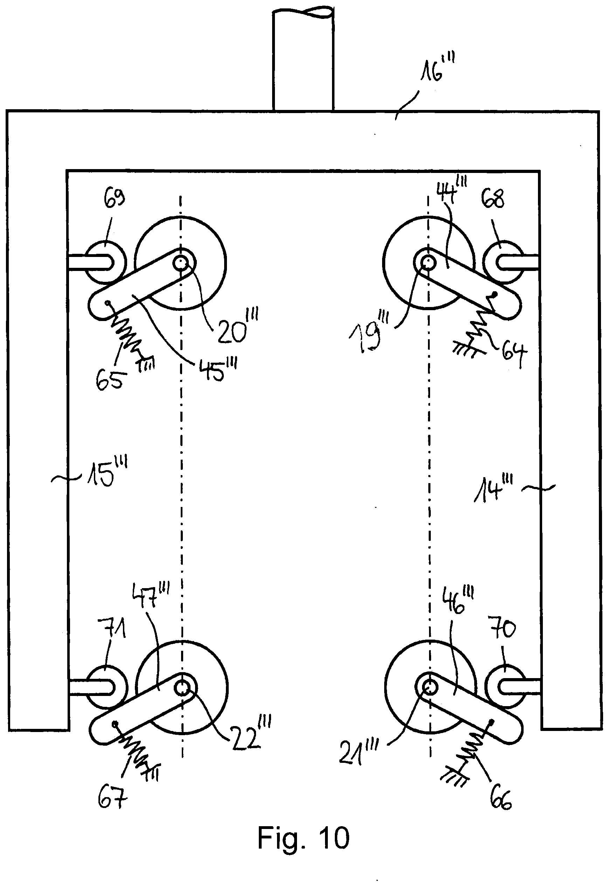

Auch bei dem in Fig. 10 gezeigten Ausführungsbeispiel sind die Schubstangen 14"', 15'" parallel zueinander angeordnet und durch einen Quersteg 16"' etwa U-förmig miteinander verbunden. Mit Hilfe eines in Fig. 10 nicht näher dargestellten Stellantriebs kann der aus den Schubstangen 14"', 15'" und dem Quersteg 16"' gebildete Schiebemechanismus in einer rechtwinklig zur Längserstreckung der Ventilnadeln verlaufenden Schieberichtung 13 relativ zu der Halterung verschoben werden.

Zwischen den Armen 44"', 45"', 46"', 47'" und dem Schiebemechanismus 14"', 15"', 16'" ist jedoch keine direkte Kopplung vorhanden. Die Arme 44"', 45"', 46"', 47"' werden mittels Federelementen 64, 65, 66, 67 kontinuierlich an kleine Rollen 68, 69, 70, 71 angepresst, die an den Schubstangen 14"', 15'" angeordnet sind. Die Federelemente 64, 65, 66, 67 sind jeweils an ihrem einen Ende gegen den betreffenden Arm 44"', 45'", 46'", 47"' und an ihrem anderen Ende gegen eine Widerlagerstelle abgestützt.

Diese Ausgestaltung ist auch für den in Fig. 11 gezeigte Nocken-Rotationsmechanismus geeignet. Dabei kann die Nockenbahn ein Stufenprofil aufweisen, so dass eine kleine Bewegung des Schiebemechanismus 14"', 15"', 16"' dazu genutzt werden kann, um die Trägerplatte 11 um etwa 3 mm - 10 mm zu bewegen und die Ventilnadeln 2 der Heißkanaldüsen 8 zu öffnen. In diesem Fall kann die Trägerplatte 11 ein Rahmen sein, der aus steifen, aber leichten Rohren / Stangen (diese können bei Bedarf extrudiert sein) gebildet ist. Eine derartige, leichte und steife Rahmenstruktur kann leichter von dem in Fig. 11 gezeigten Nocken-Rotationsmechanismus bewegt werden.

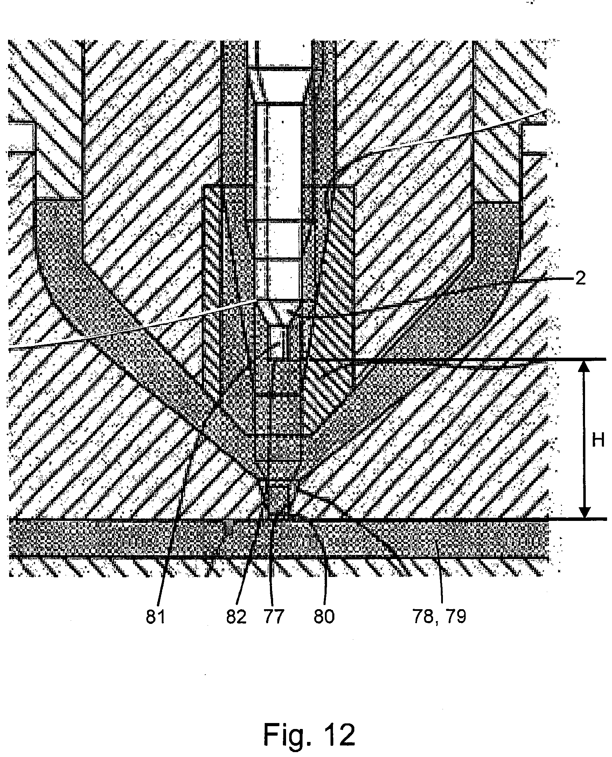

Bei dem in Fig. 12 dargestellten Beispiel weisen die Ventilnadeln 2 an ihrem von der Trägerplatte 11 entfernten freien Endbereich einen zylindrischen Abschnitt 81 auf, der in der Auslassöffnung 80 der Heißkanaldüse 8 positionierbar ist. Mit Hilfe der Stelleinrichtung können die Ventilnadeln 2 zwischen einer in Fig. 12 dargestellten ersten Position, in welcher die Auslassöffnungen 80 bzw. die Heißkanaldüsen 8 vollständig geöffnet sind, und einer zweiten Position, in welcher die Auslassöffnungen 80 bzw. die Heißkanaldüsen 8 vollständig geschlossen sind, verstellt werden. In der zweiten Position sind die Ventilnadeln 2 gegenüber der ersten Position um einen Hub H auf die Formhöhlung 78, 79 zu verschoben. Zwischen der ersten Position und der zweiten Position können die Ventilnadeln 2 in einer oder mehreren Zwischenpositionen kontrolliert positioniert werden.

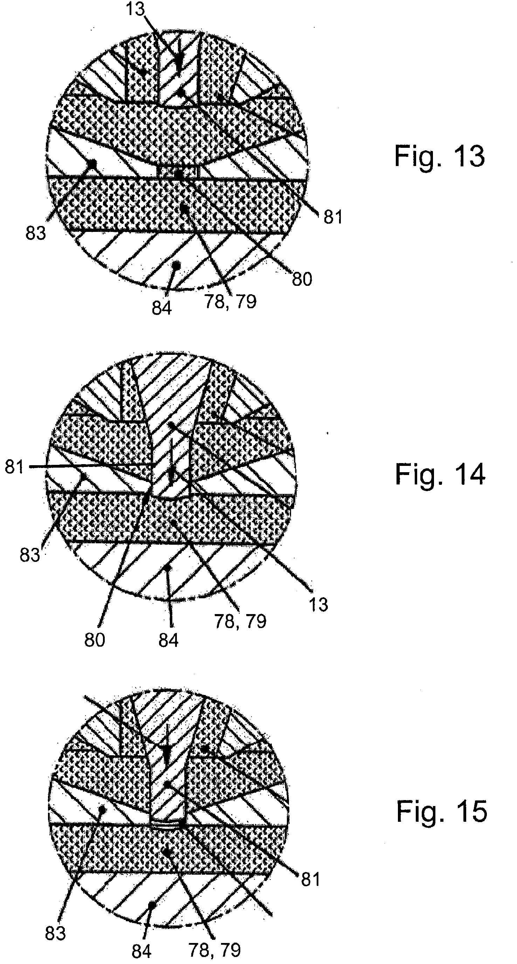

In Fig. 13 ist erkennbar, dass zum Einbringen der Schmelze in die Formhöhlungen 78, 79 die Auslassöffnungen 80 der Heißkanaldüsen 8 zunächst vollständig geöffnet werden, in dem die Ventilnadeln 2 in eine erste Position gebracht werden, in der die freien Enden 82 der Ventilnadeln 2 von den Ventilsitzen 77 beabstandet sind. Sobald die Formhöhlungen 78, 79 vollständig mit Schmelze befüllt sind, werden die Ventilnadeln 2 in eine in Fig. 14 gezeigte zweite Position gebracht, in der die zylindrischen Abschnitte 81 der Ventilnadeln 2 jeweils die ihnen zugeordnete Auslassöffnung 80 verschließen. Dabei durchdringen die Ventilnadeln 2 die Auslassöffnungen 80 und stehen jeweils mit ihren freien Enden 82 etwas über die dazu benachbarte Wandung des Formwerkzeugteils 83 in die Formhöhlung 78, 79 vor. Durch diese Maßnahme ergibt sich am Spritzling eine saubere Angussstelle. Nachdem die in den Formhöhlungen 78, 79 befindliche Schmelze soweit abgekühlt ist, dass die Spritzlinge aus den Formhöhlung 78, 79 entformt werden können, werden die Ventilnadeln 2 etwas zurückgezogen und in eine in Fig. 15 gezeigte dritte Position gebracht, in der die zylindrischen Abschnitte 81 der Ventilnadeln 2 weiterhin Auslassöffnung 80 verschließen, die freien Enden 82 der Ventilnadeln 2 aber nicht mehr in die Formhöhlungen 78, 79 vorstehen. In dieser Ventilnadelposition werden die Formwerkzeugteile 83 in die Offenstellung gebracht und die Spritzlinge werden aus den Formhöhlung 78, 79 entfernt.

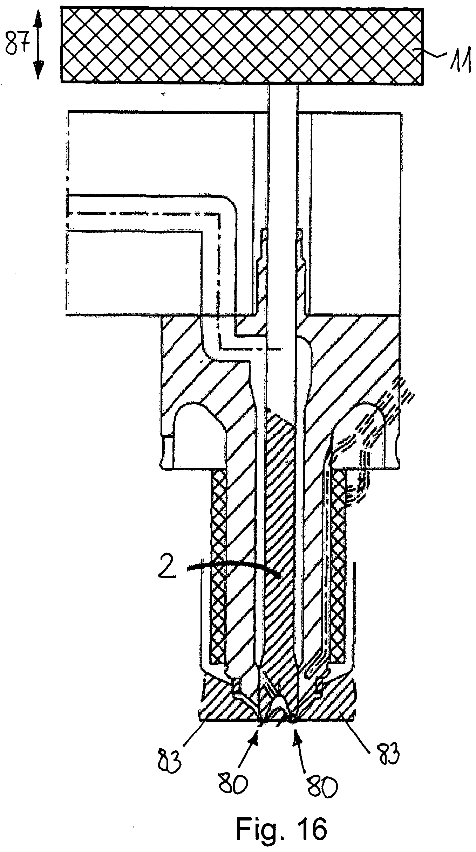

Bei dem in Fig. 16 gezeigten Ausführungsbeispiel sind die Heißkanaldüsen 8 jeweils als offene Spritzgießdüsen mit einer an der Trägerplatte 11 befestigten Ventilnadel 2 ausgestaltet, an deren formseitigem Ende mehrere Nadelspitzen 85, beispielsweise drei in gleichmäßigem Abstand zueinander angeordnet Spitzen vorgesehen sind. Die Nadelspitzen 85 sind konisch ausgebildet und ragen in ebenfalls konische Auslassöffnungen 80, so dass sich in diesen Auslassöffnungen 80 Ringspalte ergeben, durch welche das Spritzgießmaterial in die Formhöhlung 78, 79 eingespritzt werden kann.

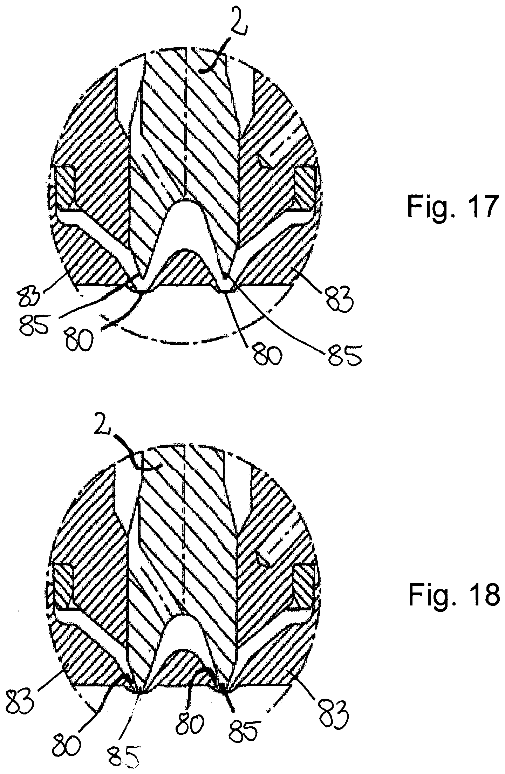

Die Ventilnadeln 2 sind durch Verstellen der Trägerplatte 11 in Richtung ihrer Längserstreckung verstellbar und können zur Reduzierung der Querschnitte im Bereich der Nadelspitzen befindlichen Ringspalte beziehungsweise der dort vorgesehenen Auslassöffnungen 80 aus einer ersten, in Fig. 16 dargestellten Position, in eine zweite, in Fig. 18 dargestellte Position auf die Formhöhlung 78, 79 zu bewegt werden. Beim Zurückziehen der Ventilnadeln 2 von der zweiten in die erste Position gehen die Ringspalte der Auslassöffnungen 80 nach dem Zurückziehen der Ventilnadeln 2 am eigentlichen Eintritt in die Formhöhlung 78, 79 sogar in eine etwa kreisförmige Auslassöffnung 80 über, die erst dann wieder zum Ringspalt wird, wenn die Nadelspitzen wieder auf die zweite Position zu bewegt werden.

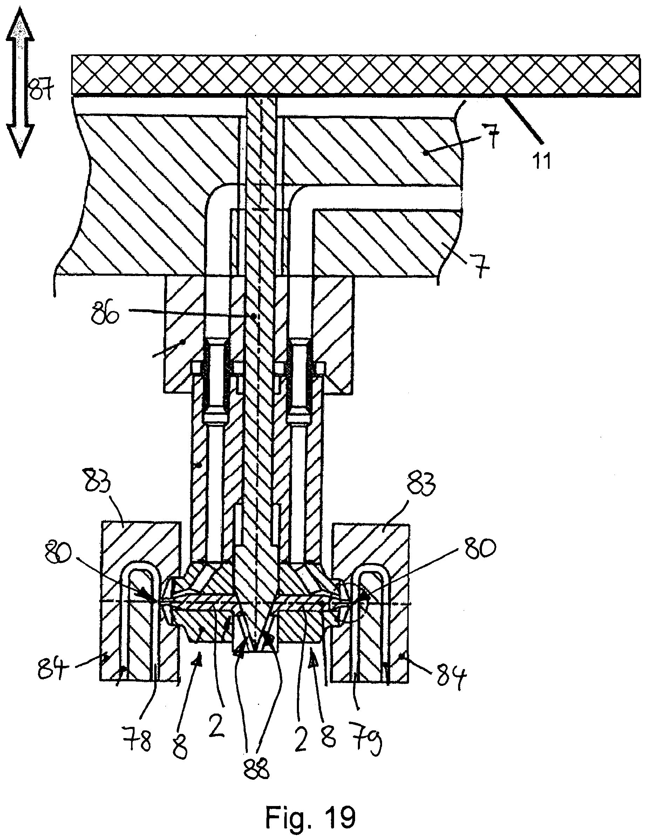

Bei dem in Fig. 19 gezeigten Ausführungsbeispiel hält die Trägerplatte 11 mehrere stabförmige Verstellmittel 86, die sich parallel zueinander und parallel zur ersten Richtung 87 erstrecken. Wie bei den zuvor beschriebenen Ausführungsformen, bei denen die Trägerplatte 11 die Ventilnadeln 2 trägt, ist die Trägerplatte 11 auch bei dem in Fig. 16 gezeigten Ausführungsbeispiel mittels des Stellmotors 12, des Schiebemechanismus 14, 15, 16, des Eingreif- oder Verbindungsmechanismus 60, 61, 62, 63, der Bewegungstransformationseinrichtungen (Drehmechanismen) 23, 24, 25, 26 und des Hubmechanismus 27 in eine erste Richtung 87 relativ zu den Halteplatten 3, 4, 5, 6 entlang der ersten Richtung 87 hin- und her verschiebbar an der Halterung gelagert. Dabei ist die erste Richtung parallel zu den Verstellmitteln 86 angeordnet. Die Ausführungen für die zuvor beschriebenen Ausführungsbeispiele gelten somit für das in Fig. 16 gezeigte Ausführungsbeispiel entsprechend.

Jedem Verstellmittel 86 sind jeweils zwei am Verteiler 7 angeordnete Heißkanaldüsen 8 zugeordnet, die in unterschiedliche Richtungen weisende Auslassöffnungen 80 haben. Wie in Fig. 19 erkennbar ist, weisen die Ventilnadeln 2 dieser Heißkanaldüsen 8 mit ihren freien Enden in zueinander entgegen gesetzte Richtungen. In den Heißkanaldüsen 8 sind die Ventilnadeln 2 auf das Verstellmittel 86 zu und von diesem weg verschiebbar gelagert.

Die Ventilnadeln 2 stehen jeweils derart mit dem ihnen zugeordneten Verstellmittel 86 in Antriebsverbindung, dass die Schließkraft über die Trägerplatte 11 und das Verstellmittel 86 auf die Ventilnadeln 2 übertragbar ist. Das Verstellmittel 86 weist dazu an einem von der Trägerplatte 11 beabstandeten Endbereich für jede ihm zugeordnete Ventilnadeln 2 jeweils eine Schrägfläche 88 auf, an der das von der der betreffenden Ventilnadel 2 zugeordneten Formhöhlung 78, 79 beabstandete Ende dieser Ventilnadel 2 zur Anlage kommt. Wenn sich die Ventilnadeln 2 in ihrer Offenstellung befinden und die Trägerplatte 11 entlang des Doppelpfeils 87 auf die Ventilnadeln 2 zu bewegt wird, werden die Ventilnadeln 2 von dem Verstellmittel 86 verdrängt und jeweils in Richtung ihrer Schließstellung verschoben.

## Patentansprüche

1. Stelleinrichtung (1) zum Verstellen von Ventilnadeln (2) einer Heißkanal-Spritzgießvorrichtung aufweisend:
- eine Halterung, an der eine mehrere Ventilnadeln (2) und/ oder Verstellmittel (86) für die Ventilnadeln (2) tragende Trägerplatte (11) in Axialrichtung der Ventilnadeln (2) und/ oder Verstellmittel (86) hin- und her verschiebbar ist,
- einen mit der Halterung verbundenen Verteiler (7), an dem Heißkanaldüsen (8) angeordnet sind, in die sich die Ventilnadeln (2) erstrecken, um die Strömung einer Schmelze zu steuern, **gekennzeichnet durch**
- eine Hubvorrichtung zum Verschieben der Trägerplatte (11) in Axialrichtung der Ventilnadeln (2) und/ oder Verstellmittel (86), welche Hubvorrichtung an der Halterung ein um eine erste Achse drehbar gelagertes erstes Drehelement (19, 19', 19", 19'") und ein um eine zu der ersten Achse parallele zweite Achse drehbar gelagertes zweites Drehelement (20, 20', 20", 20'") aufweist, wobei das erste Drehelement (19, 19', 19", 19'") über eine mindestens eine erste Schrägfläche aufweisende erste Bewegungstransformationseinrichtung (23) und das zweite Drehelement (20, 20', 20", 20'") über eine mindestens eine zweite Schrägfläche aufweisende zweite Bewegungstransformationseinrichtung (24) mit der Trägerplatte (11) in Antriebsverbindung steht,
- wobei die Stelleinrichtung (1) einen mit einer Ansteuereinrichtung verbundenen Stellantrieb (12) zum Erzeugen einer Linearbewegung aufweist,
- wobei mit dem Stellantrieb (12) ein Schiebemechanismus in Antriebsverbindung steht, der eine erste Schubstange (14, 14', 14", 14"') und eine parallel dazu beabstandete zweite Schubstange (15, 15', 15", 15"') aufweist, die miteinander verbunden und an der Halterung in eine quer zur Axialrichtung der Ventilnadeln (2) und/ oder Verstellmittel (86) orientierten Schieberichtung hin und her verschiebbar gelagert sind, und
- wobei die erste Schubstange (14, 14', 14", 14'") mit dem ersten Drehelement (19, 19', 19", 19'") und die zweite Schubstange (15, 15', 15", 15"') mit dem zweiten Drehelement (20, 20', 20", 20"') in Antriebsverbindung steht.

2. Stelleinrichtung nach Anspruch 1, wobei die Hubvorrichtung an der Halterung ein um eine dritte Achse drehbar gelagertes, mit der ersten Schubstange (14, 14', 14", 14"') in Antriebsverbindung stehendes drittes Drehelement (21, 21', 21", 21'") und ein um eine vierte Achse drehbar gelagertes, mit der zweiten Schubstange (15, 15', 15", 15'") in Antriebsverbindung stehendes viertes Drehelement (22, 22', 22", 22"') aufweist, dass die dritte und vierte Achse jeweils parallel zur ersten und zweiten Achse beabstandet sind, und dass das dritte Drehelement (21, 21', 21", 21'") über eine mindestens eine dritte Schrägfläche aufweisende dritte Bewegungstransformationseinrichtung (25) und das vierte Drehelement (22, 22', 22", 22"') über eine mindestens eine vierte Schrägfläche aufweisende vierte Bewegungstransformationseinrichtung (26) mit der Trägerplatte (11) in Antriebsverbindung steht.

3. Stelleinrichtung nach Anspruch 1 oder 2, wobei die Schubstangen (14, 14', 14", 14"', 15, 15', 15", 15'") als Zahnstangen und die Drehelemente (19, 19', 19", 19'", 20, 20', 20", 20"', 21, 21', 21", 21'", 22, 22', 22", 22"') als damit in Eingriff stehende Zahnräder ausgestaltet sind.

4. Stelleinrichtung nach einem der vorhergehenden Ansprüche, wobei die einzelnen Drehelemente (19, 19', 19", 19'", 20, 20', 20", 20"', 21, 21', 21", 21'", 22, 22', 22", 22"') jeweils an einer von ihrer Achse beabstandeten Stelle über eine quer zur Schieberichtung (13) verlaufende Kulissenführung und/ oder ein Schwenklager mit der ihnen jeweils zugeordneten Schubstange (14, 14', 14", 14"', 15, 15', 15", 15'") verbunden sind.

5. Stelleinrichtung nach einem der vorhergehenden Ansprüche, wobei die Bewegungstransformationseinrichtungen (23, 24, 25, 26) als Kugelgewindetriebe ausgestaltet sind.

6. Stelleinrichtung nach einem der vorhergehenden Ansprüche, wobei die Drehelemente (19, 19', 19", 19"', 20, 20', 20", 20'", 21, 21', 21", 21'", 22, 22', 22", 22'") zwischen den Schubstangen (14, 14', 14", 14"', 15, 15', 15", 15'") angeordnet sind.

7. Stelleinrichtung nach einem der vorhergehenden Ansprüche, wobei der Stellmotor (12) derart als Elektromotor ausgestaltet und/ oder mittels einer geeigneten Ansteuereinrichtung ansteuerbar ist, dass die Ventilnadeln (2) in mindestens einer zwischen einer ersten Position und einer zweiten Position angeordneten dritten Position positionierbar sind und in der dritten Position gegebenenfalls gehalten werden können.

## Claims

1. Actuating device (1) for adjusting valve pins (2) of a hot runner injection molding apparatus comprising:
- a mounting on which a support plate (11) supporting a plurality of valve pins (2) and/ or adjusting means (86) for the valve pins (2) is displaceable back and forth in the axial direction of the valve pins (2) and/ or adjusting means (86),
- a manifold (7) connected to the mounting on which the hot runner nozzles (8) are arranged into which the valve pins (2) extend in order to control the flow of a melt,
**characterized in**
- a reciprocating apparatus for displacing the support plate (11) in the axial direction of the valve pins (2) and/ or adjusting means (86), said reciprocating apparatus comprising a first rotary element (19, 19', 19", 19"') rotatably mounted about a first axis and a second rotary element (20, 20', 20", 20'") rotatably mounted about a second axis parallel to the first axis on the mounting, wherein the first rotary element (19, 19', 19", 19'") is in drive connection with the support plate (11) via a first motion converter device (23) having at least one first inclined plane and the second rotary element (20, 20', 20", 20'") is in drive connection with the support plate (11) via a second motion converter device (24) having at least one second inclined plane,
- wherein the actuating device (1) comprises an actuating drive (12) coupled to a control device for generating a linear movement,
- wherein a sliding mechanism is in drive connection with the actuating drive (12) which comprises a first thrust rod (14, 14', 14", 14'") and a second thrust rod (15, 15', 15", 15"') spaced at a distance parallel thereto which are interconnected and are slideable mounted back and forth to the mounting in a sliding direction (13) oriented transverse to the axial direction of the valve pins (2) and/ or adjusting means (86), and
- wherein the first thrust rod (14, 14', 14", 14'") is in drive connection with the first rotary element (19, 19', 19", 19'") and the second thrust rod (15, 15', 15", 15"') is in drive connection with the second rotary element (20, 20', 20", 20"').

2. Actuating device according to claim 1, wherein the reciprocating apparatus comprises on the mounting a third rotary element (21, 21', 21", 21'") in drive connection with the first thrust rod (14, 14', 14", 14'") rotatably mounted about a third axis and a fourth rotary element (22, 22', 22", 22'") in drive connection with the second thrust rod (15, 15', 15", 15"') rotatably mounted about a fourth axis, in that the third and fourth axes are respectively at a parallel distance to the first and second axes and in that the third rotary element (21, 21', 21", 21'") is in drive connection with the support plate (11) via a third motion converter device (25) comprising at least one third inclined plane and the fourth rotary element (22, 22', 22", 22"') is in drive connection with the support plate (11) via fourth motion converter device (26) comprising at least one fourth inclined plane.

3. Actuating device according to claim 1 or 2, wherein the thrust rods (14, 14', 14", 14'", 15, 15', 15", 15'") are designed as gear racks and the rotary elements (19, 19', 19", 19"', 20, 20', 20", 20'", 21, 21', 21", 21"', 22, 22', 22", 22"') are designed as gear pinions engaged with same.

4. Actuating device according to one of the preceding claims, wherein each individual rotary element (19, 19', 19", 19'", 20, 20', 20", 20'", 21, 21', 21", 21"', 22, 22', 22", 22'") is connected to its respectively associated thrust rod (14, 14', 14", 14"', 15, 15', 15", 15"') at a point distanced from its axis via a slotted guide system extending transverse to the sliding direction (13) and/ or a pivot bearing.

5. Actuating device according to one of the preceding claims, wherein the motion converter devices (23, 24, 25, 26) are configured as ball screws.

6. Actuating device according to one of the preceding claims, wherein the rotary elements (19, 19', 19", 19"', 20, 20', 20", 20"', 21, 21', 21", 21'", 22, 22', 22", 22"') are arranged between the thrust rods (14, 14', 14", 14"', 15, 15', 15", 15"').

7. Actuating device according to one of the preceding claims, wherein the actuator (12) is designed as an electric motor and/or controllable by means of a suitable drive control device such that the valve pins (2) can be positioned in at least one third position disposed between a first position and a second position and can be held as needed in said third position.

## Revendications

1. Dispositif de réglage (1) pour régler des aiguilles de soupape (2) d'un système de moulage par injection à canal chaud, comportant :
- une monture sur laquelle un plateau porteur (11) portant plusieurs aiguilles de soupape (2) et/ou moyens de réglage (86) pour les aiguilles de soupape (2) est mobile en va-et-vient en direction axiale des aiguilles de soupape (2) et/ou des moyens de réglage (86),
- un distributeur (7) relié à la monture, sur lequel sont agencées des buses à canal chaud (8) dans lesquelles s'étendent les aiguilles de soupape (2) pour commander l'écoulement d'une matière en fusion,
**caractérisé par**
- un moyen de levage pour translater le plateau porteur (11) en direction axiale des aiguilles de soupape (2) et/ou des moyens de réglage (86), ledit moyen de levage comprenant sur la monture un premier élément rotatif (19, 19', 19", 19"') monté mobile en rotation autour d'un premier axe et un second élément rotatif (20, 20', 20", 20"') monté mobile en rotation autour d'un second axe parallèle au premier axe, le premier élément rotatif (19, 19', 19", 19"') étant en liaison d'entraînement avec le plateau porteur (11) par un premier moyen de transformation de mouvement (23) comprenant au moins une première surface oblique, et le second élément rotatif (20, 20', 20", 20"') étant en liaison d'entraînement avec le plateau porteur (11) par un second moyen de transformation de mouvement (24) comprenant au moins une seconde surface oblique,
dans lequel
- le dispositif de réglage (1) comprend un entraînement de réglage (12) relié à un moyen de pilotage pour générer un mouvement linéaire,
- un mécanisme de coulissement est en liaison d'entraînement avec l'entraînement de réglage (12), qui comprend une première tige de poussée (14, 14', 14", 14"') et une seconde tige de poussée (15, 15', 15", 15"') espacée parallèlement à la première, qui sont reliées l'une à l'autre et montées sur la monture de façon mobile en va-et-vient dans une direction de coulissement orientée transversalement à la direction axiale des aiguilles de soupape (2) et/ou des moyens de réglage (86), et
- la première tige de poussée (14, 14', 14", 14"') est en liaison d'entraînement avec le premier élément rotatif (19, 19', 19", 19"') et la seconde tige de poussée (15, 15', 15", 15"') est en liaison d'entraînement avec le second élément rotatif (20, 20', 20", 20'").

2. Dispositif de réglage selon la revendication 1,
dans lequel
le moyen de levage sur la monture comprend un troisième élément rotatif (21, 21', 21", 21'") monté mobile en rotation autour d'un troisième axe et en liaison d'entraînement avec la première tige de poussée (14, 14', 14", 14"'), et un quatrième élément rotatif (22, 22', 22", 22"') monté mobile en rotation autour d'un quatrième axe et en liaison d'entraînement avec la seconde tige de poussée (15, 15', 15", 15'"),
le troisième et le quatrième axe sont espacés chacun parallèlement au premier et au second axe,
le troisième élément rotatif (21, 21', 21", 21'") est en liaison d'entraînement avec le plateau porteur (11) par un troisième moyen de transformation de mouvement (25) comprenant au moins une troisième surface oblique, et
le quatrième élément rotatif (22, 22', 22", 22"') est en liaison d'entraînement avec le plateau porteur (11) par un quatrième moyen de transformation de mouvement (26) comprenant au moins une quatrième surface oblique.

3. Dispositif de réglage selon la revendication 1 ou 2,
dans lequel
les tiges de poussée (14, 14', 14", 14"', 15, 15', 15", 15"') sont réalisées sous forme de crémaillères et les éléments rotatifs (19, 19', 19", 19"', 20, 20', 20", 20"', 21, 21', 21", 21"', 22, 22', 22", 22"') sont réalisés sous forme de roues dentées en engrènement avec celles-ci.

4. Dispositif de réglage selon l'une des revendications précédentes,
dans lequel
à un emplacement espacé de leur axe, les éléments rotatifs individuels (19, 19', 19", 19"', 20, 20', 20", 20"', 21, 21', 21", 21'", 22, 22', 22", 22'") sont reliés chacun à la tige de poussée respective (14, 14', 14", 14"', 15, 15', 15", 15"') qui leur est associée par un guidage à coulisse s'étendant transversalement à la direction de coulissement (13) et/ou par un palier de pivotement.

5. Dispositif de réglage selon l'une des revendications précédentes, dans lequel les moyens de transformation de mouvement (23, 24, 25, 26) sont réalisés sous forme de mécanisme à vis à recirculation de billes.

6. Dispositif de réglage selon l'une des revendications précédentes, dans lequel les éléments rotatifs (19, 19', 19", 19'", 20, 20', 20", 20'", 21, 21', 21", 21'", 22, 22', 22", 22"') sont agencés entre les tiges de poussée (14, 14', 14", 14'", 15, 15', 15", 15'").

7. Dispositif de réglage selon l'une des revendications précédentes, dans lequel le moteur de réglage (12) est réalisé sous forme de moteur électrique et/ou est pilotable à l'aide d'un moyen de pilotage approprié de telle sorte que les aiguilles de soupape (2) peuvent être positionnées dans au moins une troisième position disposée entre une première position et une seconde position et peuvent le cas échéant être maintenues dans la troisième position.
